# EUROPEAN PATENT APPLICATION

(11) **EP 4 654 652 A1**
(43) Date of publication of application: **26.11.2025**
(21) Application number: 23917293.5
(22) Date of filing: 19.12.2023
(51) Int. Cl.: H04W 24/08

(54) **BEAM FAILURE DETECTION METHOD AND APPARATUS, AND TERMINAL, FIRST NODE AND NETWORK DEVICE**

(30) Priority: 16.01.2023 CN 202310084020
(71) Applicant: Datang Mobile Communications Equipment Co., Ltd., Beijing 100085 (CN)
(72) Inventor: SONG, Lei, Beijing 100085 (CN); SU, Xin, Beijing 100085 (CN); ZHANG, Xin, Beijing 100085 (CN)
(74) Representative: Studio Torta S.p.A.
(86) International application number: PCT/CN2023/139739
(87) International publication number: WO 2024/152826

(57) **Abstract**

Provided are a beam failure detection method and apparatus, a terminal, a first node and a network device. The method applied to the terminal includes: obtaining a first measurement value, wherein the first measurement value is obtained by the terminal based on a first beam failure detection (BFD) set; obtaining a first indication value, wherein the first indication value is obtained by a first node based on a second BFD set; and determining whether a beam failure occurs to a third BFD set based on the first measurement value and the first indication value.

## Description

### CROSS-REFERENCE TO RELATED APPLICATION

The present disclosure claims a priority of Chinese Patent Application No. 202310084020.0 entitled "BEAM FAILURE DETECTION METHOD AND APPARATUS, TERMINAL, FIRST NODE AND NETWORK DEVICE" filed on January 16, 2023, the entire contents of which are hereby incorporated by reference in their entirety.

### TECHNICAL FIELD

The present disclosure relates to the technical field of communications, and in particular to a beam failure detection method and apparatus, a terminal, a first node and a network device.

### BACKGROUND

Reconfigurable intelligent surface (Reconfigurable Intelligent Surface, RIS) is a candidate technology for the 6th generation mobile network (6th Generation Mobile Network, 6G) technologies, and has advantages such as low cost, low energy consumption, programmability, and easy deployment. The RIS is an electromagnetic active surface with communication capabilities, formed by a large-scale device array and an array control module, which can be used to manipulate the response of each device unit to a wireless signal, such as amplitude, phase, frequency, and polarization. By superimposing wireless response signals of the device units on the large-scale device array, specific macroscopic beam propagation characteristics are formed, thereby creating a controllable intelligent wireless environment.

In an RIS system, since the RIS lacks a signal processing capability, the terminal can only report beam failure detection for an equivalent link from a 5G base station (gNB) to the RIS to a user equipment (UE), making it impossible to determine a specific link where the beam failure occurs.

### SUMMARY

The present disclosure is to provide a beam failure detection method and apparatus, a terminal, a first node and a network device, to solve the problem that the terminal cannot determine a specific link where a beam failure occurs to the beam failure detection method in the related technologies.

In a first aspect, in order to solve the above technical problem, an embodiment of the present disclosure provides a beam failure detection method, applied to a terminal, including:
obtaining a first measurement value, where the first measurement value is obtained by the terminal based on a first beam failure detection (BFD) set;
obtaining a first indication value, where the first indication value is obtained by a first node based on a second BFD set; and
determining whether a beam failure occurs to a third BFD set based on the first measurement value and the first indication value.

Optionally, the first BFD set is used for beam failure detection of an equivalent link, and the equivalent link corresponds to a channel formed from a network device to the first node and then to the terminal;
the second BFD set is used for beam failure detection of a first hop link, and the first hop link corresponds to a channel formed from the network device to the first node; and
the third BFD set is used for beam failure detection of a second hop link, and the second hop link corresponds to a channel formed from the first node to the terminal.

Optionally, the obtaining the first indication value includes: receiving the first indication value transmitted by the first node, where the first indication value is used to indicate one of the following target values:
a local measurement value, where the local measurement value is a measurement value obtained by the first node from the second BFD set;
a local measurement value and a measurement offset value, where the measurement offset value is a measurement deviation of the local measurement value;
an estimated value determined by the first node based on the local measurement value and the measurement offset value.

Optionally, the first indication value indicates an absolute quantization value of the target value; or, the first indication value indicates a relative quantization value of the target value relative to a first predefined threshold.

Optionally, the determining whether the beam failure occurs to the third BFD set based on the first measurement value and the first indication value includes:
determining a third measurement value based on the first measurement value and the first indication value; and
determining whether the beam failure occurs to the third BFD set based on the third measurement value.

Optionally, the determining the third measurement value based on the first measurement value and the first indication value includes:
determining a second measurement value based on the first indication value, and determining a difference between the first measurement value and the second measurement value as the third measurement value; or,
determining a second measurement value based on the first indication value, and determining a sum of the first measurement value and the second measurement value as the third measurement value; or,
determining a second indication value corresponding to the first measurement value, and determining a logical XOR value of the first indication value and the second indication value as the third measurement value; or,
determining a second indication value corresponding to the first measurement value, and determining a logical OR value of the first indication value and the second indication value as the third measurement value; or,
determining a second indication value corresponding to the first measurement value, and determining a logical AND value of the first indication value and the second indication value as the third measurement value.

Optionally, the determining whether the beam failure occurs to the third BFD set based on the first measurement value and the first indication value includes:
determining whether the beam failure occurs to the first BFD set based on the first measurement value;
determining whether the beam failure occurs to the second BFD set based on the first indication value;
determining that the beam failure occurs to the third BFD set, in a case where the beam failure occurs to the first BFD set, and the beam failure does not occur to the second BFD set; and
determining that the beam failure does not occur to the third BFD set, in a case where the beam failure does not occur to the first BFD set, and the beam failure occurs to the second BFD set.

Optionally, the first hop link includes at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

Optionally, the second hop link includes at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

Optionally, after determining whether the beam failure occurs to the third BFD set based on the first measurement value and the first indication value, the method further includes: transmitting a first beam failure recovery request to a network device, in response to determining that the beam failure occurs to the third BFD set, where the first beam failure recovery request carries at least one of:
first information, used to indicate that the beam failure occurs to the third BFD set; or
a first index, where the first index is an index of a first new beam identification (NBI) set corresponding to the third BFD set.

Optionally, the beam failure detection method further includes:
determining whether the beam failure occurs to the first BFD set based on the first measurement value; and
transmitting a second beam failure recovery request to a network device, in response to determining that the beam failure occurs to the first BFD set, where the second beam failure recovery request carries at least one of:
second information, used to indicate that the beam failure occurs to the first BFD set; or
a second index, where the second index is an index of a second NBI set corresponding to the first BFD set.

In a second aspect, in order to solve the above technical problem, an embodiment of the present disclosure provides a beam failure detection method, applied to a first node, including:
performing measurement on a second BFD set to obtain a local measurement value; and
transmitting a first indication value to a terminal, where the first indication value is used to indicate one of the following target values:
the local measurement value;
the local measurement value and a measurement offset value, where the measurement offset value is a measurement deviation of the local measurement value;
an estimated value determined based on the local measurement value and the measurement offset value.

Optionally, the second BFD set is used for beam failure detection of a first hop link, and the first hop link corresponds to a channel formed from a network device to the first node.

Optionally, the first indication value indicates an absolute quantization value of the target value; or, the first indication value indicates a relative quantization value of the target value relative to a first predefined threshold.

In a third aspect, in order to solve the above technical problem, an embodiment of the present disclosure provides a beam failure detection method, applied to a network device, including:
receiving a first beam failure recovery request or a second beam failure recovery request transmitted by a terminal,
where the first beam failure recovery request carries at least one of:
first information, used to indicate that a beam failure occurs to a third BFD set; or
a first index, where the first index is an index of a first NBI set corresponding to the third BFD set,
where the second beam failure recovery request carries at least one of:
second information, used to indicate that a beam failure occurs to a first BFD set; or
a second index, where the second index is an index of a second NBI set corresponding to the first BFD set.

Optionally, the first BFD set is used for beam failure detection of an equivalent link, and the equivalent link corresponds to a channel formed from the network device to a first node and then to the terminal; and
the third BFD set is used for beam failure detection of a second hop link, and the second hop link corresponds to a channel formed from the first node to the terminal.

Optionally, the beam failure detection method further includes: configuring a second BFD set for the terminal, where the second BFD set is used for beam failure detection of a first hop link, and the first hop link corresponds to a channel formed from the network device to a first node.

In a fourth aspect, in order to solve the above technical problem, an embodiment of the present disclosure provides a terminal, including: a transceiver, a memory, a processor, and a computer program stored on the memory and executable on the processor, where the processor is configured to read the computer program from the memory and perform the following processes:
obtaining a first measurement value, where the first measurement value is obtained by the terminal based on a first BFD set;
obtaining a first indication value, where the first indication value is obtained by a first node based on a second BFD set; and
determining whether a beam failure occurs to a third BFD set based on the first measurement value and the first indication value.

Optionally, the first BFD set is used for beam failure detection of an equivalent link, and the equivalent link corresponds to a channel formed from a network device to the first node and then to the terminal;
the second BFD set is used for beam failure detection of a first hop link, and the first hop link corresponds to a channel formed from the network device to the first node; and
the third BFD set is used for beam failure detection of a second hop link, and the second hop link corresponds to a channel formed from the first node to the terminal.

Optionally, the processor is further configured to read the program from the memory and perform the following processes:
receiving the first indication value transmitted by the first node,
where the first indication value is used to indicate one of the following target values:
a local measurement value, where the local measurement value is a measurement value obtained by the first node from the second BFD set;
a local measurement value and a measurement offset value, where the measurement offset value is a measurement deviation of the local measurement value;
an estimated value determined by the first node based on the local measurement value and the measurement offset value.

Optionally, the first indication value indicates an absolute quantization value of the target value; or, the first indication value indicates a relative quantization value of the target value relative to a first predefined threshold.

Optionally, the processor is further configured to read the program from the memory and perform the following processes:
determining a third measurement value based on the first measurement value and the first indication value; and
determining whether the beam failure occurs to the third BFD set based on the third measurement value.

Optionally, the processor is further configured to read the program from the memory and perform the following processes:
determining a second measurement value based on the first indication value, and determining a difference between the first measurement value and the second measurement value as the third measurement value; or,
determining a second measurement value based on the first indication value, and determining a sum of the first measurement value and the second measurement value as the third measurement value; or,
determining a second indication value corresponding to the first measurement value, and determining a logical XOR value of the first indication value and the second indication value as the third measurement value; or,
determining a second indication value corresponding to the first measurement value, and determining a logical OR value of the first indication value and the second indication value as the third measurement value; or,
determining a second indication value corresponding to the first measurement value, and determining a logical AND value of the first indication value and the second indication value as the third measurement value.

Optionally, the processor is further configured to read the program from the memory and perform the following processes:
determining whether the beam failure occurs to the first BFD set based on the first measurement value;
determining whether the beam failure occurs to the second BFD set based on the first indication value;
determining that the beam failure occurs to the third BFD set, in a case where the beam failure occurs to the first BFD set, and the beam failure does not occur to the second BFD set; and
determining that the beam failure does not occur to the third BFD set, in a case where the beam failure does not occur to the first BFD set, and the beam failure occurs to the second BFD set.

Optionally, the first hop link includes at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

Optionally, the second hop link includes at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

Optionally, the processor is further configured to read the program from the memory and perform the following processes:
transmitting a first beam failure recovery request to a network device, in response to determining that the beam failure occurs to the third BFD set, where the first beam failure recovery request carries at least one of:
first information, used to indicate that the beam failure occurs to the third BFD set; or
a first index, where the first index is an index of a first new beam identification (NBI) set corresponding to the third BFD set.

Optionally, the processor is further configured to read the program from the memory and perform the following processes:
determining whether the beam failure occurs to the first BFD set based on the first measurement value; and
transmitting a second beam failure recovery request to a network device, in response to determining that the beam failure occurs to the first BFD set, where the second beam failure recovery request carries at least one of:
second information, used to indicate that the beam failure occurs to the first BFD set; or
a second index, where the second index is an index of a second NBI set corresponding to the first BFD set.

In a fifth aspect, in order to solve the above technical problem, an embodiment of the present disclosure provides a first node, including: a transceiver, a memory, a processor, and a computer program stored on the memory and executable on the processor, where the processor is configured to read the computer program from the memory and perform the following processes:
performing measurement on a second BFD set to obtain a local measurement value; and
transmitting a first indication value to a terminal, where the first indication value is used to indicate one of the following target values:
the local measurement value;
the local measurement value and a measurement offset value, where the measurement offset value is a measurement deviation of the local measurement value;
an estimated value determined based on the local measurement value and the measurement offset value.

Optionally, the second BFD set is used for beam failure detection of a first hop link, and the first hop link corresponds to a channel formed from a network device to the first node.

Optionally, the first indication value indicates an absolute quantization value of the target value; or, the first indication value indicates a relative quantization value of the target value relative to a first predefined threshold.

In a sixth aspect, in order to solve the above technical problem, an embodiment of the present disclosure provides a network device, including: a transceiver, a memory, a processor, and a computer program stored on the memory and executable on the processor, where the processor is configured to read the computer program from the memory and perform the following processes: receiving a first beam failure recovery request or a second beam failure recovery request transmitted by a terminal,
where the first beam failure recovery request carries at least one of:
   first information, used to indicate that a beam failure occurs to a third BFD set; or
   a first index, where the first index is an index of a first NBI set corresponding to the third BFD set,
where the second beam failure recovery request carries at least one of:
   second information, used to indicate that a beam failure occurs to a first BFD set; or
   a second index, where the second index is an index of a second NBI set corresponding to the first BFD set.

Optionally, the first BFD set is used for beam failure detection of an equivalent link, and the equivalent link corresponds to a channel formed from the network device to a first node and then to the terminal; and
the third BFD set is used for beam failure detection of a second hop link, and the second hop link corresponds to a channel formed from the first node to the terminal.

Optionally, the processor is further configured to read the program from the memory and perform the following process: configuring a second BFD set for the terminal, where the second BFD set is used for beam failure detection of a first hop link, and the first hop link corresponds to a channel formed from the network device to a first node.

In a seventh aspect, in order to solve the above technical problem, an embodiment of the present disclosure provides a beam failure detection apparatus, applied to a terminal, including:
a first obtaining module, configured to obtain a first measurement value, where the first measurement value is obtained by the terminal based on a first beam failure detection (BFD) set;
a second obtaining module, configured to obtain a first indication value, where the first indication value is obtained by a first node based on a second BFD set; and
a first determination module, configured to determine whether a beam failure occurs to a third BFD set based on the first measurement value and the first indication value.

In an eighth aspect, in order to solve the above technical problem, an embodiment of the present disclosure provides a beam failure detection apparatus, applied to a first node, including:
a third obtaining module, configured to perform measurement on a second BFD set to obtain a local measurement value; and
a transmitting module, configured to transmit a first indication value to a terminal, where the first indication value is used to indicate one of the following target values:
the local measurement value;
the local measurement value and a measurement offset value, where the measurement offset value is a measurement deviation of the local measurement value;
an estimated value determined based on the local measurement value and the measurement offset value.

In a ninth aspect, in order to solve the above technical problem, an embodiment of the present disclosure provides a beam failure detection apparatus, applied to network device, including: a receiving module, configured to receive a first beam failure recovery request or a second beam failure recovery request transmitted by a terminal,
where the first beam failure recovery request carries at least one of:
   first information, used to indicate that a beam failure occurs to a third BFD set; or
   a first index, where the first index is an index of a first NBI set corresponding to the third BFD set,
where the second beam failure recovery request carries at least one of:
   second information, used to indicate that a beam failure occurs to a first BFD set; or
   a second index, where the second index is an index of a second NBI set corresponding to the first BFD set.

In a tenth aspect, in order to solve the above technical problem, an embodiment of the present disclosure provides a processor readable storage medium, storing a computer program for causing a processor to perform the beam failure detection method described in the first aspect, or for causing the processor to perform the beam failure detection method described in the second aspect, or for causing the processor to perform the beam failure detection method described in the third aspect.

The above-mentioned technical solution of the present disclosure has the following beneficial effects. In the above scheme, by obtaining a first measurement value and a first indication value, a terminal can determine whether a beam failure occurs to a first BFD set based on the first measurement value, can determine whether a beam failure occurs to a second BFD set based on the first indication value, and can determine whether a beam failure occurs to a third BFD set based on the first measurement value and the first indication value. In this way, a specific link where the beam failure occurs can be accurately and conveniently determined.

### BRIEF DESCRIPTION OF THE DRAWINGS

FIG. 1 is a first flow chart of a beam failure detection method according to an embodiment of the present disclosure;
FIG. 2 is a first schematic diagram of equivalent link partitioning according to an embodiment of the present disclosure;
FIG. 3 is a second schematic diagram of equivalent link partitioning according to an embodiment of the present disclosure;
FIG. 4 is a second flow chart of a beam failure detection method according to an embodiment of the present disclosure;
FIG. 5 is a third flow chart of a beam failure detection method according to an embodiment of the present disclosure;
FIG. 6 is a first structural block diagram of a beam failure detection apparatus according to an embodiment of the present disclosure;
FIG. 7 is a second structural block diagram of a beam failure detection apparatus according to an embodiment of the present disclosure;
FIG. 8 is a third structural block diagram of a beam failure detection apparatus according to an embodiment of the present disclosure;
FIG. 9 is a schematic diagram of a hardware structure of a terminal according to an embodiment of the present disclosure;
FIG. 10 is a schematic diagram of a hardware structure of a first node according to an embodiment of the present disclosure; and
FIG. 11 is a schematic diagram of a hardware structure of a network device according to an embodiment of the present disclosure.

### DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

The terminal device involved in the embodiments of the present disclosure may be a device that provides voice and/or data connectivity to a user, a handheld device with a radio connection function, or other processing devices connected to a radio modem or the like. In different systems, the names of terminal may be different. For example, in a 5th generation mobile network (5G) system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beamforming transmission, or the like.

Firstly, the content involved in the embodiment of the present disclosure will be introduced.

In a new radio (New Radio, NR) system, the terminal may determine a beam failure detection-reference signal set (Beam Failure Detection-Reference Signal set, BFD-RS set) based on a configuration from the network side or a predefined rule, and then may detect a BFD RS in the BFD-RS set. When measurement values of all BFD-RSs in one BFD-RS set are below a certain threshold, the physical layer of the terminal indicates this event to the medium access control (Medium Access Control, MAC) layer of the terminal. If the number of beam failure events received by the MAC layer within a certain time period reaches a value configured by the network side, the MAC layer will trigger the terminal to report the beam failure event to the network side. Each BFD-RS set corresponds to an equivalent link between the base station (gNB) and the terminal, for example, a link between a cell and the terminal, or a link between a TRP and the terminal. After receiving a failure recovery request from the terminal, the network side may identify the link experiencing the beam failure, and may restore transmission by using a higher-quality new beam.

In the RIS system, due to the lack of signal processing capability, the RIS cannot detect and report any beam failure event on a link from the gNB to the RIS. Only the terminal can detect and report a beam failure event on an equivalent link from the gNB to the RIS to UE. For example, the terminal may detect a beam failure in the equivalent link, and accordingly, when measuring a new candidate beam, the terminal can only measure a beam corresponding to the equivalent link. Since the terminal cannot determine which link has failed (it may be the link from the gNB to the RIS, or the link from the RIS to UE), the terminal can only perform measurement on new beams from two channels, which may result in a large number of new beams or beam combinations that need to be measured. In a case that the terminal has a limited capability, for example, the terminal can measure up to 64 new beams according to NR protocols, which may greatly reduce the probability of detecting new beams or result in poor quality of the detected new beams.

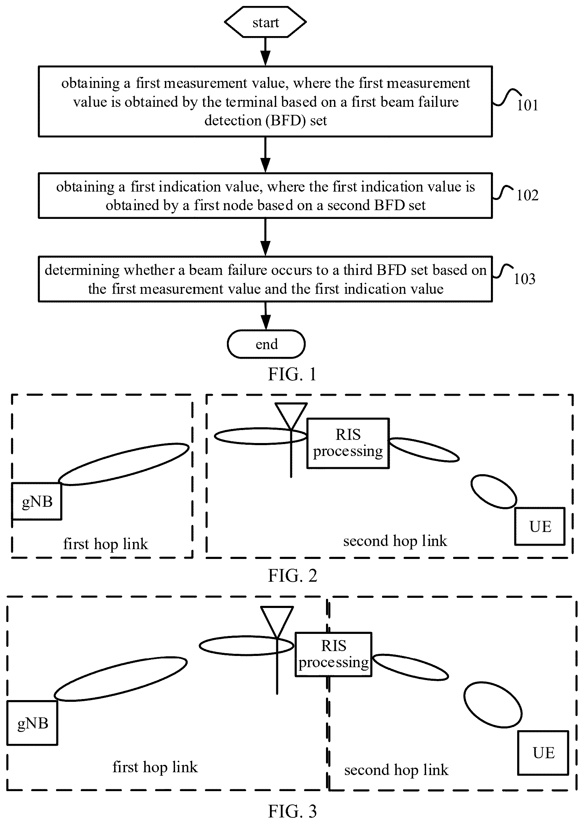

Referring to FIG. 1, an embodiment of the present disclosure provides a beam failure detection method, applied to a terminal. The method includes the following steps.

Step 101: obtaining a first measurement value, where the first measurement value is obtained by the terminal based on a first beam failure detection (BFD) set.

Optionally, the first BFD set is configured by a network side for the terminal, or determined by the terminal according to a predefined rule. The first BFD set is used for beam failure detection of equivalent links, and the equivalent link corresponds to a channel formed from a network device to the first node and then to the terminal.

Optionally, the first node includes at least one of a control node, an RIS, a network controlled repeater (Network Controlled Repeater, NCR), or a relay.

Optionally, the first node may also be a type of network device.

In a specific implementation, the first BFD set may include: at least one of a beam failure detection reference signal (BFD RS), and/or a beam index. In a case that the first BFD set includes a BFD RS, the BFD RS corresponds to an index of a reference signal resource or a reference signal transmitted by the network side. In a case that the first BFD set includes a beam index, a value of the beam index corresponds to a beamforming related parameter adopted by the first node. In a case that the first BFD set includes a BFD RS and a beam index, each BFD RS corresponds to one or more beam indices, indicating that the BFD RS is transmitted by the network side and forwarded to the terminal via the first node. The terminal obtains the first measurement value by performing beam detection on the first BFD set. In a case that the first measurement value is less than or equal to a second predefined threshold (or the first measurement value is worse than the second predefined threshold), the terminal determines that the beam failure occurs to the first BFD set.

For example, the terminal determines the first BFD set based on network configuration or a predefined rule. Beam information of the first BFD set is the same as that of the equivalent link or a physical downlink control channel (Physical Downlink Control Channel, PDCCH) of the equivalent link. Therefore, measurement can be directly performed on the first BFD set to determine the corresponding first measurement value. The beam information corresponds to a Transmission Configuration Indication (Transmission Configuration Indication, TCI) status and/or a beam index of the reference signal.

For example, in a case that the first BFD set only corresponds to beamforming or TCI status of a transmission beam from the network device (such as the gNB), and processing for the RIS (such as beamforming of a reception beam or beamforming of a transmission beam) is indicated in the beam index, the terminal performs measurement on the BFD RS set with a specific beam index value (such as the beam index value used for a PDCCH transmission) to determine the corresponding first measurement value; or, the terminal determines the first BFD set corresponding to the equivalent link based on a combination of the BFD RS of the first hop link or a channel between the network device and the RIS, and the value of the beam index (for example, it is indicated to the terminal by the network side, and corresponds to the second hop link), and then determines the first measurement value corresponding to the equivalent link based on the first BFD set. Optionally, the network side indicate a beam index for RIS processing to the terminal.

The first measurement value includes one of the following: block error rate (Block Error Rate, BLER) of PDCCH assumption, Layer 1 reference signal received power (Layer 1 Reference Signal Received Power, L1-RSRP), Layer 1 signal to interference plus noise ratio (Layer 1 Signal to Interference plus Noise Ratio, L1-SSINR), signal to interference plus noise ratio (Signal to Interference plus Noise Ratio, SINR).

Step 102: obtaining a first indication value, where the first indication value is obtained by a first node based on a second BFD set.

The second BFD set is used for beam failure detection of the first hop link, and the first hop link corresponds to a channel formed from the network device to the first node.

Optionally, the second BFD set is configured by the network side for the first node, or determined according to a predefined rule.

Step 103: determining whether a beam failure occurs to a third BFD set based on the first measurement value and the first indication value.

The third BFD set is used for beam failure detection of a second hop link, and the second hop link corresponds to a channel formed from the first node to the terminal.

In the above embodiments, the terminal can determine whether the beam failure occurs to the first BFD set based on the first measurement value, can determine whether the beam failure occurs to the second BFD set based on the first indication value, and can determine whether the beam failure occurs to the third BFD set based on the first measurement value and the first indication value, which can achieve accurate determination of a specific link where the beam failure occurs.

In a specific embodiment, in step 102, the obtaining the first indication value includes: receiving the first indication value transmitted by the first node; where the first indication value is used to indicate one of the following target values:
a local measurement value, where the local measurement value is a measurement value from the second BFD set obtained by the first node;
a local measurement value and a measurement offset value, where the measurement offset value is a measurement deviation of the local measurement value;
an estimated value determined by the first node based on the local measurement value and the measurement offset value.

In a specific implementation, the first node may indicate the first indication value to the terminal through a control channel or a medium access control control element (Medium Access Control Control Element, MAC-CE) signaling.

The measurement offset value will be illustrated below in combination with specific example scenarios.

### Example scenario 1

As shown in FIG. 2, the first hop link only contains beamforming of a transmission beam of the gNB and a channel from the gNB to the RIS. In this case, the first node may perform measurement on the second BFD set like a regular terminal to obtain a local measurement value. The local measurement value may include a BLER measurement value, an SINR measurement value, an L1-RSRP measurement value, etc.

In a case that the first node includes a control node and an RIS, a link between the gNB and the first node is Quasi-co-location (Quasi-co-location, QCL) with a link between the gNB and the RIS, that is, a transmission beam from the gNB to the first node is the same as a transmission beam from the gNB to the RIS. If the control node employs an omnidirectional antenna, and the RIS uses a directional receiver, there will be a certain deviation or offset between the first hop link and an actual experienced link (including the beamforming of gNB transmission beam, and the link from the gNB to the RIS). This measurement deviation or measurement offset arises from differences in receiving antenna configurations of the control node and the RIS.

In example scenario 1, the measurement offset value is determined according to the following manners.

### Manner A1: pre-measuring or predefining the measurement offset value.

Specifically, if deployments of the gNB, the control node, and the RIS are fixed, it may be assumed that a beamforming direction of a reception beam of the RIS is also fixed towards the gNB, and in this assumption, the measurement offset value may be measured in advance or predefined. For example, an offset value of receiving antenna gains of the control node and the RIS is calculated according to the number of control nodes and the number of RIS elements included in an RIS array. The predefined measurement offset value is known to both the gNB and the control node.

### Manner A2: calculating the measurement offset value in real-time.

Specifically, if the control node knows the processing performed by the RIS, the control node may indicate a processing matrix of the RIS (such as beamforming and/or phase modulation) to the control node via the gNB, and then, the control node may compare its own reception beam with a reception beam of the RIS and may calculate the measurement offset value in real-time.

### Example scenario 2

As shown in FIG. 3, the first hop link includes beamforming of a transmission beam of the gNB, a channel from the gNB to the RIS, and at least part of RIS processing.

Specifically, if the control node is deployed in front of an RIS panel, the control node may receive a signal reflected or forwarded by the RIS. If the control node is deployed behind the RIS panel, the control node may receive a signal transmitted or forwarded by the RIS. The distinction between taking the control node and the terminal as receiving observation points is that a channel from the RIS to the control node is different from a channel between the RIS and the terminal. The similarity is that first hop links corresponding to the control node and the RIS are the same, which is similar to example scenario 1 mentioned above.

In example scenario 2, the measurement offset value is determined according to the following manners.

Since the channel between the RIS node and the control node is a deterministic channel, the control node may transmit a reference signal, which is then reflected by the RIS back to the control node. The control node demodulates the received reference signal to obtain an estimated value or a measurement value (such as an L1-RSRP, a BLER, an SINR, etc.) of the channel between the control node and the RIS.

In this example, the measurement offset value is a measurement offset caused by a near-field channel between the RIS and the control node. For example, the measurement value is predefined for the terminal or configured by the network side for the terminal.

Furthermore, in the above example scenario 1 and example scenario 2, the indicating the measurement offset value to the terminal may include the following three manners.

Manner B1: the first node determines an estimated value based on the local measurement value and the measurement offset value, and indicates the estimated value to the terminal.

Specifically, the control node performs a weight calculation on the measured local measurement value and the measurement offset value to obtain a corrected second measurement value (i.e., the estimated value). For example, a sum of the local measurement value and the measurement offset value is taken as the second measurement value, or a difference between the local measurement value and the measurement offset value is taken as the second measurement value, and the second measurement value is indicated to the terminal.

It should be pointed out that the second measurement value is a measurement value that corresponds to or matches the first hop link (gNB-RIS) in the equivalent link (gNB-RIS-UE), while the local measurement value is a measurement value that matches the channel from gNB to the control node.

Manner B2: both the local measurement value and the measurement offset value are indicated to the terminal.

In a case that the measurement offset value is calculated in real-time by the first node, the local measurement value and the measurement offset value may be jointly indicated to the terminal. The terminal determines whether a beam failure occurs to the second hop link based on the local measurement value and the measurement offset value. For example, the terminal determines a measurement value of the first hop link based on the local measurement value and the measurement offset value, jointly determines a measurement value corresponding to the second hop link based on the measurement value of the equivalent link, and then compares it with a predefined threshold to determine whether the beam failure occurs to the second hop link. Alternatively, the terminal may determine a new or corrected predefined threshold value corresponding to the measurement value of the second hop link based on the measurement offset value and the predefined threshold value, jointly determines the measurement value corresponding to the second hop link based on the local measurement value and the measurement value of the equivalent link, and compares it with the new or corrected predefined threshold value to determine whether the beam failure occurs to the second hop link.

Manner B3: the local measurement value is indicated to the terminal.

In a case that the measurement offset value is pre-measured or predefined, for example, known to both the gNB and the control node, there is no need to indicate the measurement offset value to the terminal, only the local measurement value can be sent to the terminal. Then the terminal determines whether the beam failure occurs to the second hop link based on the local measurement value, the predefined measurement offset value, and the measurement value of the equivalent link, which follows the same logic as manner B2.

In an embodiment, the first indication value indicates an absolute quantization value of the target value; or, the first indication value indicates a relative quantization value of the target value relative to a first predefined threshold.

Optionally, the first predefined threshold is used to determine whether the beam failure occurs to the second BFD set. Optionally, the first predefined threshold includes one or more thresholds related to the measurement value.

Specifically, the target value may be converted into N binary bits as the first indication value of the target value, such as the absolute quantization value of the target value or a quantization value relative to the first predefined threshold. For example, if the target value is greater than or equal to the first predefined threshold, the target value is quantized as "1"; and if the target value is less than the first predefined threshold, the target value is quantized as "0". Alternatively, if the target value is greater than or equal to the first predefined threshold, the target value is quantized as "0"; and if the target value is less than the first predefined threshold, the target value is quantized as "1". Alternatively, if the target value is less than the first value of the first predefined threshold, the target value is quantized as "00"; if the target value is greater than or equal to a first value of the first predefined threshold but less than a second value of the first predefined threshold, the target value is quantized as "01"; if the target value is greater than or equal to the second value of the first predefined threshold but less than a third value of the first predefined threshold, the target value is quantized as "10"; if the target value is greater than or equal to the third value of the first predefined threshold, the target value is quantized as "11". Alternatively, a relative offset value between the target value and the first predefined threshold may be quantized into N bits.

The type of the target value may be one of a BLER, an L1-RSRP, an L1-SSINR, or an SINR.

For example, in a case that the type of the target value is the L1-RSRP, the first node may quantize an L1-RSRP measurement value into N bits. The quantization value may be an absolute quantization value of the L1-RSRP (such as N=7 bits), or a quantization value (such as N=4 bits) of a relative offset value of the L1-RSRP relative to the first predefined threshold (such as XdBm).

For example, the first node quantizes a BLER measurement value into N bits (such as N=4 bits, 2 bits, or 1 bit). The quantization value may be a quantization value that is independent of the first predefined threshold, such as performing uniform or non-uniform quantization on the BLER between A1 and A2 values. It may also be a quantization value compared with the first predefined threshold. For example, if it is greater than or equal to the first predefined threshold, the indication value is "0", and if it is less than the first predefined threshold, the indication value is "1"; or, if it is greater than the first threshold value, the indication value is "1", and if it is less than or equal to the first threshold value, the indication value is "0".

In addition, for other types of measurement values, similar quantization processing may be performed with reference to the L1-RSRP and the BLER.

In an embodiment, in step 103, the step of determining whether the beam failure occurs to the third BFD set based on the first measurement value and the first indication value includes:
determining a third measurement value based on the first measurement value and the first indication value; and
determining whether the beam failure occurs to the third BFD set based on the third measurement value.

Specifically, the determining the third measurement value based on the first measurement value and the first indication value includes one of the following manners:
Manner 1: determining the second measurement value based on the first indication value, and determining a difference between the first measurement value and the second measurement value as the third measurement value.

For example, if the first measurement value is a first L1-RSRP and the second measurement value is a second L1-RSRP, a difference between the first L1-RSRP and the second L1-RSRP may be determined as the third measurement value.

For example, the first measurement value is the first BLER, the second measurement value is the second BLER. If the first BLER is greater than the second predefined threshold, it indicates that a channel is worse, and a value may take 1; if the second BLER is less than or equal to the first predefined threshold, it indicates that the channel is good, and the value is 0. In this case, the third measurement value is a difference between the first BLER and the second BLER, which is equal to 1.

Manner 2: determining a second measurement value based on the first indication value, and determining a sum of the first measurement value and the second measurement value as the third measurement value.

Manner 3: determining a second indication value corresponding to the first measurement value, and determining a logical XOR value of the first indication value and the second indication value as the third measurement value.

Manner 4: determining a second indication value corresponding to the first measurement value, and determining a logical OR value of the first indication value and the second indication value as the third measurement value.

Manner 5: determining a second indication value corresponding to the first measurement value, and determining a logical AND value of the first indication value and the second indication value as the third measurement value.

For example, the first measurement value is the first BLER, if the second indication value corresponding to the first measurement value is 1, it indicates that a channel is poor; if the second indication value is 0, it indicates that the channel is good, then the third measurement value is the logical AND value of the first indication value and the second indication value, which is equal to 1.

In a specific implementation, the third measurement value may be compared with the third predefined threshold to determine whether the third BFD set has experienced beam failure. If the third measurement value is worse than the third predefined threshold, the terminal determines that the beam failure occurs to the third BFD set and reports a beam failure event; if the third measurement value is not worse than (e.g., better than or equal to) the third predefined threshold, the terminal determines that no beam failure occurs to the third BFD set and no beam failure event needs to be reported.

It should be pointed out that in a case that the third predefined threshold is the BLER, the "worse than" indicates that the third measurement value is higher than the assumed third predefined threshold; in a case that the third predefined threshold is the L1-RSRP, it means that the measurement value is lower than the third predefined threshold.

In another embodiment, in step 103, the determining whether the beam failure occurs to the third BFD set based on the first measurement value and the first indication value includes:
determining whether a beam failure occurs to the first BFD set based on the first measurement value;
determining whether a beam failure occurs to the second BFD set based on the first indication value;
determining that the beam failure occurs to the third BFD set, in a case where the beam failure occurs to the first BFD set, and the beam failure does not occur to the second BFD set; and
determining that the beam failure does not occur to the third BFD set, in a case where the beam failure does not occur to the first BFD set, and the beam failure occurs to the second BFD set.

In the embodiment, it may facilitate the terminal to determine whether the beam failure occurs to a link corresponding to the BFD set within a limited capability range. For example, if the first BFD set experiences the beam failure, it is determined that the equivalent link from the network device to the first node and then to the terminal has experienced the beam failure. If the second BFD set experiences the beam failure, it is determined that the first hop link has experienced the beam failure; and if the beam failure occurs to the third BFD set, it is determined that the second hop link has experienced the beam failure.

The following will explain the method of dividing the equivalent link into the first hop link and the second hop link.

Firstly, it should be pointed out that in an RIS system, it is assumed that a modulation matrix of an RIS array may be represented in the following form: *W = W_{T}*Ø*W_{R}*, where *W_{R}* represents beamforming of a reception beam for a gNB transmission signal by the RIS, *W_{T}* represents beamforming of a terminal transmission beam by the RIS, and Ø is the phase modulation matrix for compensating for path loss and other effects.

In a case that the RIS is only used for beamforming of the reception beam, the modulation matrix of the RIS may be controlled as *W = W_{R}*, that is, Ø *= I, W_{T} = I*, and *I* is a unit matrix.

In a case that the RIS is only used for beamforming of the transmission beam, the modulation matrix of the RIS may be controlled as *W = W_{T},* that is, Ø *= I*, and *W_{R}* = *I.*

In a case that the RIS is only used for phase modulation, the modulation matrix of the RIS may be controlled as *W =* Ø, that is, *W_{T}* = *I*, and *W_{R}* = *I.*

Similarly, in a case that the RIS is used for both the beamforming of the reception beam and the phase modulation, the modulation matrix is *W =* Ø*W_{R}*, where *W_{T} = I.*

In a case that the RIS is used for both the beamforming of the transmission beam and the phase modulation, the modulation matrix is *W = W_{T}*Ø, where *W_{T} = I.*

Assuming that the beamforming of the gNB transmission beam is P, the beamforming of the terminal reception beam is T, a channel between the gNB and the RIS is *H_{gNB-RIS},* and a channel between the RIS and the terminal is *H_{RIS-UE},* then the equivalent channel between the gNB and the UE may be expressed as: *H_{eq} =* T*H_{RIS-UE}WH_{gNB-RIS}*P *=* T*H_{RIS-UE}W_{T}*Ø*W_{R}H_{gNB-RIS}*P*.*

Based on the above, in an embodiment, when dividing the equivalent link into two hop links, the first hop link includes at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

In an embodiment, when dividing the equivalent link into two hop links, the second hop link includes at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

Specifically, when dividing the equivalent link into two hop links, the following division manners may be included, as shown in Table 1 and Table 2 below.
(1) When the modulation matrix of the RIS array may be represented as *W = W_{T}*Ø*W_{R}*, the equivalent link may be divided into two hop links according to the division manner in Table 1:

| division manner | second hop link | first hop link | notes |
|---|---|---|---|
| 1 | T*H_{RIS-UE}* | *W_{T}*Ø*W_{R}H_{gNB-RIS}*P | beamforming of a gNB transmission beam, a channel between gNB-RIS, and RIS processing (including beamforming of an RIS reception beam, phase modulation for the RIS, and beamforming of an RIS transmission |
| | | | beam) are regarded as the first hop link; beamforming of a UE reception beam and a channel between RIS-UE are regarded as the second hop link |
| 2 | T*H_{RIS-UE}W_{T}* | Ø*W_{R}H_{gNB-RIS}*P | beamforming of a gNB transmission beam, a channel between gNB-RIS, beamforming of an RIS reception beam, and phase modulation for the RIS are regarded as the first hop link; beamforming of a UE reception beam, a channel between RIS-UE and beamforming of an RIS transmission beam are regarded as the second hop link |
| 3 | T*H_{RIS-UE}W_{T}* | *W_{R}H_{gNB-RIS}*P | beamforming of a gNB transmission beam, a channel between gNB-RIS, beamforming of an RIS reception beam are regarded as the first hop link; beamforming of a UE reception beam, a channel between RIS-UE, beamforming of an RIS transmission beam and phase modulation for the RIS are regarded as the second hop link |
| 4 | T*H_{RIS-UE}W_{T}* | *H_{gNB-RIS}*P | beamforming of a gNB transmission beam, and a channel between gNB-RIS are regarded as the first hop link; beamforming of a UE reception beam, a channel between RIS-UE beamforming of an RIS transmission beam, phase modulation for the RIS, and beamforming of an RIS reception beam are regarded as the second hop link |
| 5 | T*H_{RIS-UE}W_{T}* | P | beamforming of a gNB transmission beam is regarded as the first hop link; beamforming of |
| a UE reception beam, a channel between RIS-UE, beamforming of an RIS transmission beam, phase modulation for the RIS, beamforming of an RIS reception beam, and a channel between gNB-RIS are regarded as the second hop link | | | |

(2) In a case that Ø = *I*, or the modulation matrix of the RIS array may be represented as *W = W_{T}W_{R},* the equivalent link may be divided into two hop links according to a division manner in Table 2.

| division manner | second hop link | first hop link | notes |
|---|---|---|---|
| 1 | T*H_{RIS-UE}* | *W_{T}W_{R}H_{gNB-RIS}*P | beamforming of a gNB transmission beam, a channel between gNB-RIS, and processing of the RIS (including beamforming of an RIS reception beam, phase modulation for the RIS, and beamforming of an RIS transmission beam) are regarded as the first hop link; beamforming of a UE reception beam and a channel between RIS-UE are regarded as the second hop link |
| 2 | T*H_{RIS-UE}W* | *W_{R}H_{gNB-RIS}*P | beamforming of a gNB transmission beam, a channel between gNB-RIS, and beamforming of an RIS reception beam are regarded as the first hop link; beamforming of a UE reception beam, a channel between RIS-UE, and beamforming of an RIS transmission beam are regarded as the second hop link |
| 3 | *TH_{RIS-UE}W* | *H_{gNB-RIS}*P | beamforming of a gNB transmission beam, and a channel between gNB-RIS are regarded as the first hop link; beamforming of a UE reception beam, a channel between RIS-UE and processing of the RIS (including beamforming of an RIS reception beam and beamforming of an RIS transmission beam) are regarded as the second |
| | | | hop link |
| 4 | *TH_{RIS-UE}W* | P | beamforming of a gNB transmission beam is regarded as the first hop link; beamforming of a UE reception beam, a channel between RIS-UE and RIS processing (including beamforming of an RIS reception beam, beamforming of an RIS transmission beam and a channel between gNB-RIS) are regarded as the second hop link |

For example, as shown in FIG. 2, the division manner of the equivalent link is division manner 4 in Table 1 or division manner 3 in Table 2. The second hop link includes the processing of the RIS (such as beamforming of an RIS reception beam, and/or, phase modulation for the RIS, and/or, beamforming of an RIS transmission beam), the channel from the RIS to the UE, and processing by the UE.

For example, as shown in FIG. 3, the division manner of the equivalent link is the division manner 2 or the division manner 3 in Table 1, or the division manner 2 in Table 2. The second hop link includes partial processing of the RIS (for example, at least including beamforming of the RIS transmission beam, or does not include beamforming of the RIS reception beam, or includes beamforming of the RIS transmission beam and/or phase modulation of the RIS), a channel from the RIS to the UE, and processing of the UE.

In the above embodiment, after dividing the equivalent link into the first hop link and the second hop link, the terminal may perform beam failure detection on the second hop link based on the first measurement value and the first indication value, and perform beam failure detection on the equivalent link based on the first measurement value. When the equivalent link experiences a beam failure or the second hop link experiences a beam failure, the terminal may report a failure event to the gNB.

In an embodiment, after determining whether the beam failure occurs to the third BFD set based on the first measurement value and the first indication value, the method further includes:
transmitting a first beam failure recovery request to a network device, in response to determining that the beam failure occurs to the third BFD set, where the first beam failure recovery request carries at least one of:
first information, used to indicate that the beam failure occurs to the third BFD set; or
a first index, where the first index is an index of a first new beam identification (NBI) set corresponding to the third BFD set.

Optionally, in a case that the beam failure occurs to the third BFD set, a first beam failure recovery request may be transmitted to the network device via a beam failure recovery (Beam Failure Recovery, BFR) medium access control, control element (Medium Access Control Control Element, MAC-CE).

In an embodiment, the beam failure detection method further includes:
determining whether the beam failure occurs to the first BFD set based on the first measurement value; and
transmitting a second beam failure recovery request to a network device, in response to determining that the beam failure occurs to the first BFD set, where the second beam failure recovery request carries at least one of:
second information, used to indicate that the beam failure occurs to the first BFD set; or
a second index, where the second index is an index of a second NBI set corresponding to the first BFD set.

Optionally, in a case that the beam failure occurs to the first BFD set, a second beam failure recovery request may be transmitted to the network device through a Physical Random Access Channel (PRACH).

As may be seen from the above embodiments, signaling contents corresponding to the first beam failure recovery request and the second beam failure recovery request are different.

For example, in a case that event 1 refers to the beam failure experienced by the first BFD set, event 2 refers to the beam failure experienced by the third BFD set, signaling contents of BFRQ corresponding to different events are different, if either of the two events satisfies a beam failure (such as a beam failure in a secondary cell (Secondary Cell, SCell)), the beam failure may be reported via the BFR MAC-CE, and the BFR MAC-CE may explicitly indicate which event this report is due to. As explicitly indicated by the first information or the second information, the first information may indicate the index or the event number of the third BFD set, and the second information may indicate the index or the event number of the first BFD set.

For example, different events correspond to different beam failure recovery requests (Beam failure recovery request, BFRQs). For example, BFRQs corresponding to different events have different signal types. If the event 1 is satisfied, the BFRQ is transmitted through a PRACH; and if the event 2 is satisfied, the BFRQ is transmitted through a BFR MAC-CE. Correspondingly, the network side may determine which beam failure event has occurred based on the detected signal type of the BFRQ. For example, if the event 1 occurs, an index (such as index 0) of the first new beamforming reference signal set (NBI-RS set) corresponding to the equivalent link is reported, and if the event 2 is satisfied, an index of the second NBI-RS set corresponding to the second hop link (such as index 1) is reported. The advantage of using the index of the NBI-RS set to indicate the failed link is that each link corresponds to an NBI-RS set, and the failed link may be uniquely determined based on the index value of the NBI-RS set.

Optionally, when both the event 1 and the event 2 occur, only the first beam failure recovery request may be sent, or only the second beam failure recovery request may be reported, without the need to report both simultaneously, to avoid wasting resources on both the terminal and the network side.

In a specific implementation, when recognizing a candidate beam, at least two new beam identification (NBI) sets are configured for the terminal, such as the first NBI set and the second NBI set, where the second NBI set corresponds to the equivalent link, that is, corresponding to the first BFD set, and the first NBI set corresponds to the second hop link, that is, corresponding to the third BFD set.

It should be pointed out that since both the equivalent link and the second hop link may have beam indices, including RIS processing, each of the first NBI set and the second NBI set may include both a reference signal and a beam index.

A reference signal in the second NBI set may be transmitted by the gNB, forwarded or weighted by a beam index. A reference signal in the first NBI set may be transmitted by the control node and forwarded by the RIS, or transmitted by the RIS, or transmitted by the UE and forwarded by the RIS. Alternatively, the first NBI set includes a reference signal or a beam index of the equivalent link, or a beam combination of multi-hop links, when performing measurement on a new beam, beams of all links except for the second hop link remain fixed and unchanged, which means measuring and identifying only the new beam of the second hop link.

In a specific implementation, when the equivalent link does not experience a beam failure, and the second hop link experiences a beam failure, the terminal reports a new beam (a reference signal or a beam index) from the first NBI set. When the equivalent link experiences a beam failure, and the second hop link does not experience a beam failure, the terminal reports a new beam (a reference signal or a beam index) from the second NBI set.

Specifically, if the terminal does not recognize a new beam (for example, there are too many beam combinations corresponding to the equivalent link, an NBI-RS configured in the second NBI set may not be suitable, or the performance of an NBI-RS may not be higher than the threshold), and the second hop link does not experience a beam failure because a beam failure of the equivalent link is caused by a beam failure of the first hop link, the first node (or the control node) may report a beam failure event of the first hop link, and the network device may replace a service beam for the terminal based on the report from the first node (or the control node).

In the above embodiments, the equivalent link from the network device to the RIS and then to the UE is divided into two segments (the first hop link and the second hop link). When a beam failure occurs to the second hop link or the equivalent link, the terminal may perform beam failure recovery reporting, which can help the network side determine which channel segment has experienced the beam failure, and can also facilitate the terminal to identify a new beam corresponding to the failed link within its limited capability.

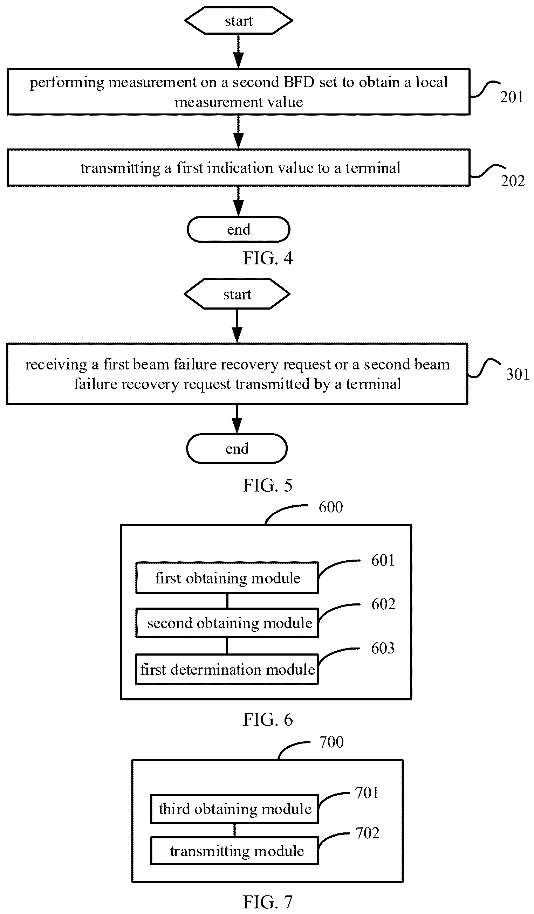

Referring to FIG. 4, an embodiment of the present disclosure provides a beam failure detection method, applied to a first node, including the following steps.

Step 201, performing measurement on a second BFD set to obtain a local measurement value.

Optionally, the first node includes at least one of a control node, an RIS, a network controlled repeater (NCR), or a relay.

The second BFD set is used for beam failure detection of the first hop link, and the first hop link corresponds to a channel formed from the network device to the first node.

Optionally, the second BFD set is configured by a network side for the first node, or determined according to a predefined rule.

Step 202, transmitting a first indication value to a terminal.

The first indication value is used to indicate one of the following target values:
the local measurement value;
the local measurement value and a measurement offset value, where the measurement offset value is a measurement deviation of the local measurement value;
an estimated value determined based on the local measurement value and the measurement offset value.

In a specific implementation, the first node may indicate the first indication value to the terminal through a control channel or an MAC-CE signaling.

For example, the first node indicates the first indication value to the terminal through a PDCCH. In order to facilitate the terminal to determine whether the PDCCH is transmitted by the network side or the first node, the PDCCH transmitted by the first node and the PDCCH transmitted by the network side (such as a base station) have at least one of the following differences:
physical resources occupied being different (for example, the first node transmit a PDCCH by using a specific control resource set or a specific search space set);
scrambling sequences of DCIs being different, where a radio network temporary identifier used for the DCI transmitted by the first node is of a newly defined type;
identification bits included in DCIs being different, where the identification bit is used to distinguish whether the DCI is transmitted by the network side (the base station) or the control node.

For example, the first node indicates the first indication value to the terminal through a pre-defined physical resource, such as through an MAC-CE signaling carried in a data channel.

It should be pointed out that specific explanation of the offset value can refer to the embodiments on the side of the terminal, and will not be repeated here to avoid repetition.

In an embodiment, the first indication value indicates an absolute quantization value of the target value; or, the first indication value indicates a relative quantization value of the target value relative to a first predefined threshold.

Optionally, the first predefined threshold is used to determine whether the second BFD set experiences a beam failure.

Specifically, the target value may be converted into N binary bits as the first indication value of the target value, such as the absolute quantization value of the target value or the quantization value of the first predefined threshold. For example, if the target value is greater than or equal to the first predefined threshold, the target value is quantized as "1"; and if the target value is less than the first predefined threshold, the target value is quantized as "0". Alternatively, if the target value is greater than or equal to the first predefined threshold, the target value is quantized as "0"; and if the target value is less than the first predefined threshold, the target value is quantized as "1". Alternatively, the relative offset value between the target value and the first predefined threshold may be quantized into N bits.

A type of the target value may be one of a BLER, an L1-RSRP, an L1-SSINR, or an SINR.

Referring to FIG. 5, an embodiment of the present disclosure provides a beam failure detection method, applied to a network device, including the following steps.

Step 301: receiving a first beam failure recovery request or a second beam failure recovery request transmitted by a terminal.

The first beam failure recovery request carries at least one of: first information, used to indicate that a beam failure occurs to a third BFD set; or a first index, where the first index is an index of a first NBI set corresponding to the third BFD set. The second beam failure recovery request carries at least one of: second information, used to indicate that a beam failure occurs to a first BFD set; or a second index, where the second index is an index of a second NBI set corresponding to the first BFD set.

Specifically, the first BFD set is used for beam failure detection of an equivalent link, and the equivalent link corresponds to a channel formed from the network device to a first node and then to the terminal; and the third BFD set is used for beam failure detection of a second hop link, and the second hop link corresponds to a channel formed from the first node to the terminal.

In the embodiment, the network device uses the first NBI set to serve the terminal based on a first beam failure request, or uses the second NBI set to serve the terminal based on the second beam failure request.

In an embodiment, the method further includes: configuring a second BFD set for the terminal, where the second BFD set is used for beam failure detection of a first hop link, and the first hop link corresponds to a channel formed from the network device to a first node.

Referring to FIG. 6, an embodiment of the present disclosure provides a beam failure detection apparatus 600, applied to a terminal, including:
a first obtaining module 601, configured to obtain a first measurement value, where the first measurement value is obtained by the terminal based on a first beam failure detection (BFD) set;
a second obtaining module 602, configured to obtain a first indication value, where the first indication value is obtained by a first node based on a second BFD set; and
a first determination module 603, configured to determine whether a beam failure occurs to a third BFD set based on the first measurement value and the first indication value.

Optionally, the first BFD set is used for beam failure detection of an equivalent link, and the equivalent link corresponds to a channel formed from a network device to the first node and then to the terminal;
the second BFD set is used for beam failure detection of a first hop link, and the first hop link corresponds to a channel formed from the network device to the first node; and
the third BFD set is used for beam failure detection of a second hop link, and the second hop link corresponds to a channel formed from the first node to the terminal.

Optionally, the second obtaining module 602 includes a first obtaining submodule, configured to receive the first indication value transmitted by the first node, where the first indication value is used to indicate one of the following target values:
a local measurement value, where the local measurement value is a measurement value obtained by the first node from the second BFD set;
a local measurement value and a measurement offset value, where the measurement offset value is a measurement deviation of the local measurement value;
an estimated value determined by the first node based on the local measurement value and the measurement offset value.

Optionally, the first indication value indicates an absolute quantization value of the target value; or, the first indication value indicates a relative quantization value of the target value relative to a first predefined threshold.

Optionally, the first determination module 603 includes:
a first determination submodule, configured to determine a third measurement value based on the first measurement value and the first indication value; and
a second determination submodule, configured to determine whether the beam failure occurs to the third BFD set based on the third measurement value.

Optionally, the first determination submodule includes:
a first determination unit, configured to determine a second measurement value based on the first indication value, and determining a difference between the first measurement value and the second measurement value as the third measurement value; or,
a second determination unit, configured to determine a second measurement value based on the first indication value, and determining a sum of the first measurement value and the second measurement value as the third measurement value; or,
a third determination unit, configured to determine a second indication value corresponding to the first measurement value, and determining a logical XOR value of the first indication value and the second indication value as the third measurement value; or,
a fourth determination unit, configured to determine a second indication value corresponding to the first measurement value, and determining a logical OR value of the first indication value and the second indication value as the third measurement value; or,
a fifth determination unit, configured to determine a second indication value corresponding to the first measurement value, and determining a logical AND value of the first indication value and the second indication value as the third measurement value.

Optionally, the first determination module 603 includes:
a third determination submodule, configured to determine whether the beam failure occurs to the first BFD set based on the first measurement value;
a fourth determination submodule, configured to determine whether the beam failure occurs to the second BFD set based on the first indication value;
a fifth determination submodule, configured to determine that the beam failure occurs to the third BFD set, in a case where the beam failure occurs to the first BFD set, and the beam failure does not occur to the second BFD set; and
a sixth determination submodule, configured to determine that the beam failure does not occur to the third BFD set, in a case where the beam failure does not occur to the first BFD set, and the beam failure occurs to the second BFD set.

Optionally, the first hop link includes at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

Optionally, the second hop link includes at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

Optionally, the apparatus 600 includes a first beam recovery module, configured to transmit a first beam failure recovery request to a network device, in response to determining that the beam failure occurs to the third BFD set, where the first beam failure recovery request carries at least one of:
first information, used to indicate that the beam failure occurs to the third BFD set; or
a first index, where the first index is an index of a first NBI set corresponding to the third BFD set.

Optionally, the apparatus 600 includes:
a third determination module, configured to determine whether the beam failure occurs to the first BFD set based on the first measurement value; and
a second beam recovery module, configured to transmit a second beam failure recovery request to a network device, in response to determining that the beam failure occurs to the first BFD set, where the second beam failure recovery request carries at least one of:
second information, used to indicate that the beam failure occurs to the first BFD set; or
a second index, where the second index is an index of a second NBI set corresponding to the first BFD set.

It should be noted that the apparatus 600 provided in the embodiment of the present disclosure can implement all method steps implemented in the above method embodiments at the terminal side, and can achieve the same technical effects. Therefore, the descriptions and beneficial effects of this embedment that are the same as the method embodiments will not be described here in detail.

Referring to FIG. 7, an embodiment of the present disclosure provides a beam failure detection apparatus 700, applied to a first node, including:
a third obtaining module 701, configured to perform measurement on a second BFD set to obtain a local measurement value; and
a transmitting module 702, configured to transmit a first indication value to a terminal, where the first indication value is used to indicate one of the following target values:
the local measurement value;
the local measurement value and a measurement offset value, where the measurement offset value is a measurement deviation of the local measurement value;
an estimated value determined based on the local measurement value and the measurement offset value.

Optionally, the second BFD set is used for beam failure detection of a first hop link, and the first hop link corresponds to a channel formed from a network device to the first node.

Optionally, the first indication value indicates an absolute quantization value of the target value; or, the first indication value indicates a relative quantization value of the target value relative to a first predefined threshold.

It should be noted that the device 700 provided in the embodiment of the present disclosure can implement all method steps implemented in the above method embodiments at the side of the first node, and can achieve the same technical effects. Therefore, the descriptions and beneficial effects of this embedment that are the same as the method embodiments will not be described here in detail.

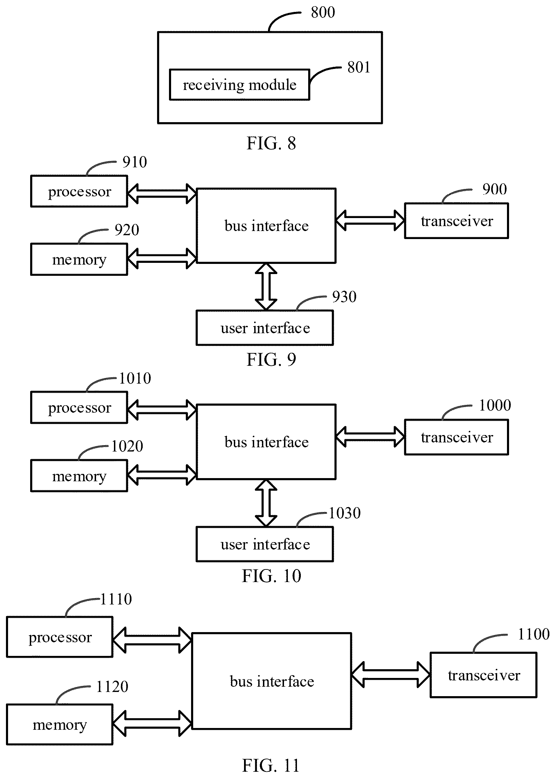

Referring to FIG. 8, an embodiment of the present disclosure provides a beam failure detection apparatus 800, applied to a network device, including:
a receiving module 801, configured to receive a first beam failure recovery request or a second beam failure recovery request transmitted by a terminal,
where the first beam failure recovery request carries at least one of:
   first information, used to indicate that a beam failure occurs to a third BFD set; or
   a first index, where the first index is an index of a first NBI set corresponding to the third BFD set,
where the second beam failure recovery request carries at least one of:
   second information, used to indicate that a beam failure occurs to a first BFD set; or
   a second index, where the second index is an index of a second NBI set corresponding to the first BFD set.

Optionally, the first BFD set is used for beam failure detection of an equivalent link, and the equivalent link corresponds to a channel formed from the network device to a first node and then to the terminal; and the third BFD set is used for beam failure detection of a second hop link, and the second hop link corresponds to a channel formed from the first node to the terminal.

Optionally, the apparatus 800 further includes a configuring module, configured to configure a second BFD set for the terminal, where the second BFD set is used for beam failure detection of a first hop link, and the first hop link corresponds to a channel formed from the network device to a first node.

It should be noted that the device 800 provided in the embodiment of the present disclosure can implement all method steps implemented in the above method embodiments at the side of the network device, and can achieve the same technical effects. Therefore, the descriptions and beneficial effects of this embedment that are the same as the method embodiments will not be described here in detail.

Referring to FIG. 9, an embodiment of the present disclosure provides a terminal, including: a processor 910; and a memory 920 connected to the processor 910 through a bus interface. The memory 920 is configured to store a program and data used by the processor 910 when performing operations, and the processor 910 is configured to call and execute the program and data stored in the memory 920. The transceiver 900 is connected to the bus interface for receiving and transmitting data under the control of the processor 910. The processor 910 is configured to read the program from the memory 920 and perform the following processes:
obtaining a first measurement value, where the first measurement value is obtained by the terminal based on a first BFD set;
obtaining a first indication value, where the first indication value is obtained by a first node based on a second BFD set; and
determining whether a beam failure occurs to a third BFD set based on the first measurement value and the first indication value.

Optionally, the first BFD set is used for beam failure detection of an equivalent link, and the equivalent link corresponds to a channel formed from a network device to the first node and then to the terminal;
the second BFD set is used for beam failure detection of a first hop link, and the first hop link corresponds to a channel formed from the network device to the first node; and
the third BFD set is used for beam failure detection of a second hop link, and the second hop link corresponds to a channel formed from the first node to the terminal.

Optionally, the processor 910 is further configured to read the program from the memory 920 and perform the following processes:
receiving the first indication value transmitted by the first node,
where the first indication value is used to indicate one of the following target values:
a local measurement value, where the local measurement value is a measurement value obtained by the first node from the second BFD set;
a local measurement value and a measurement offset value, where the measurement offset value is a measurement deviation of the local measurement value;
an estimated value determined by the first node based on the local measurement value and the measurement offset value.

Optionally, the first indication value indicates an absolute quantization value of the target value; or, the first indication value indicates a relative quantization value of the target value relative to a first predefined threshold.

Optionally, the processor is further configured to read the program from the memory and perform the following processes:
determining a third measurement value based on the first measurement value and the first indication value; and
determining whether the beam failure occurs to the third BFD set based on the third measurement value.

Optionally, the processor is further configured to read the program from the memory and perform the following processes:
determining a second measurement value based on the first indication value, and determining a difference between the first measurement value and the second measurement value as the third measurement value; or,
determining a second measurement value based on the first indication value, and determining a sum of the first measurement value and the second measurement value as the third measurement value; or,
determining a second indication value corresponding to the first measurement value, and determining a logical XOR value of the first indication value and the second indication value as the third measurement value; or,
determining a second indication value corresponding to the first measurement value, and determining a logical OR value of the first indication value and the second indication value as the third measurement value; or,
determining a second indication value corresponding to the first measurement value, and determining a logical AND value of the first indication value and the second indication value as the third measurement value.

Optionally, the processor 910 is further configured to read the program from the memory 920 and perform the following processes:
determining whether the beam failure occurs to the first BFD set based on the first measurement value;
determining whether the beam failure occurs to the second BFD set based on the first indication value;
determining that the beam failure occurs to the third BFD set, in a case where the beam failure occurs to the first BFD set, and the beam failure does not occur to the second BFD set; and
determining that the beam failure does not occur to the third BFD set, in a case where the beam failure does not occur to the first BFD set, and the beam failure occurs to the second BFD set.

Optionally, the first hop link includes at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

Optionally, the second hop link includes at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

Optionally, the processor 910 is further configured to read the program from the memory 920 and perform the following processes:
transmitting a first beam failure recovery request to a network device, in response to determining that the beam failure occurs to the third BFD set, where the first beam failure recovery request carries at least one of:
first information, used to indicate that the beam failure occurs to the third BFD set; or
a first index, where the first index is an index of a first new beam identification (NBI) set corresponding to the third BFD set.

Optionally, the processor 910 is further configured to read the program from the memory 920 and perform the following processes:
determining whether the beam failure occurs to the first BFD set based on the first measurement value; and
transmitting a second beam failure recovery request to a network device, in response to determining that the beam failure occurs to the first BFD set, where the second beam failure recovery request carries at least one of:
   second information, used to indicate that the beam failure occurs to the first BFD set; or
   a second index, where the second index is an index of a second NBI set corresponding to the first BFD set.

In FIG. 9, the bus architecture may include any number of interconnected buses and bridges, specifically one or more processors represented by the processor 910 and various circuits of memory represented by the memory 920 are linked together. The bus architecture may also link various other circuits such as a peripheral device, a voltage regulator, and a power management circuit together, which are well-known in the art, and therefore, no further descriptions are provided herein. The bus interface provides an interface. The transceiver 900 may be multiple components, including a transmitter and a receiver, providing a unit for communicating with various other devices over transmission media, including a wireless channel, a wired channel, an optical cable, and other transmission media. For different user equipment, the user interface 930 may also be an interface capable of externally or internally connecting to required equipment. The connected equipment includes but not limited to a keypad, a display, a speaker, a microphone, a joystick, and the like.

The processor 910 is responsible for managing the bus architecture and usual processing, while the memory 920 may store the data used by the processor 510 when performing operations.

Optionally, processor 910 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any one of the methods provided in the embodiments of the present application according to the obtained executable instructions by invoking the computer program stored in the memory. The processor and the memory may also be physically separated.

Referring to FIG. 10, an embodiment of the present disclosure provides a first node, including: a processor 1010; and a memory 1020 connected to the processor 1010 through a bus interface. The memory 1020 is configured to store a program and data used by the processor 1010 when performing operations, and the processor 1010 is configured to call and execute the program and data stored in the memory 1020.

The transceiver 1000 is connected to the bus interface for receiving and transmitting data under the control of the processor 1010. The processor 1010 is configured to read the program from the memory 1020 and perform the following processes:
performing measurement on a second BFD set to obtain a local measurement value; and
transmitting a first indication value to a terminal, where the first indication value is used to indicate one of the following target values:
   the local measurement value;
   the local measurement value and a measurement offset value, where the measurement offset value is a measurement deviation of the local measurement value;
   an estimated value determined based on the local measurement value and the measurement offset value.

Optionally, the second BFD set is used for beam failure detection of a first hop link, and the first hop link corresponds to a channel formed from a network device to the first node.

Optionally, the first indication value indicates an absolute quantization value of the target value; or, the first indication value indicates a relative quantization value of the target value relative to a first predefined threshold.

In FIG. 10, the bus architecture may include any number of interconnected buses and bridges, specifically one or more processors represented by the processor 1010 and various circuits of memory represented by the memory 1020 are linked together. The bus architecture may also link various other circuits such as a peripheral device, a voltage regulator, and a power management circuit together, which are well-known in the art, and therefore, no further descriptions are provided herein. The bus interface provides an interface. The transceiver 1000 may be multiple components, including a transmitter and a receiver, providing a unit for communicating with various other devices over transmission media, including a wireless channel, a wired channel, an optical cable, and other transmission media. For different user equipment, the user interface 1030 may also be an interface capable of externally or internally connecting to required equipment. The connected equipment includes but not limited to a keypad, a display, a speaker, a microphone, a joystick, and the like.

The processor 1010 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

Referring to FIG. 11, an embodiment of the present disclosure provides a network device, including: a processor 1110; and a memory 1120 connected to the processor 1110 through a bus interface. The memory 1120 is configured to store a program and data used by the processor 1110 when performing operations. The processor 1110 is configured to call and execute the program and data stored in the memory 1120.

The transceiver 1100 is connected to the bus interface for receiving and transmitting data under the control of the processor 1110. The processor 1110 is configured to read the program from the memory 1120 and perform the following processes:
receiving a first beam failure recovery request or a second beam failure recovery request transmitted by a terminal,
where the first beam failure recovery request carries at least one of:
   first information, used to indicate that a beam failure occurs to a third BFD set; or
   a first index, where the first index is an index of a first NBI set corresponding to the third BFD set,
where the second beam failure recovery request carries at least one of:
   second information, used to indicate that a beam failure occurs to a first BFD set; or
   a second index, where the second index is an index of a second NBI set corresponding to the first BFD set.

Optionally, the first BFD set is used for beam failure detection of an equivalent link, and the equivalent link corresponds to a channel formed from the network device to a first node and then to the terminal; and
the third BFD set is used for beam failure detection of a second hop link, and the second hop link corresponds to a channel formed from the first node to the terminal.

Optionally, the processor 1110 is further used to read the program from the memory 1120 and perform the following processes: configuring a second BFD set for the terminal, where the second BFD set is used for beam failure detection of a first hop link, and the first hop link corresponds to a channel formed from the network device to a first node.

In FIG. 11, the bus architecture may include any number of interconnected buses and bridges, specifically one or more processors represented by the processor 1110 and various circuits of memory represented by the memory 1120 are linked together. The bus architecture may also link various other circuits such as a peripheral device, a voltage regulator, and a power management circuit together, which are well-known in the art, and therefore, no further descriptions are provided herein. The bus interface provides an interface. The transceiver 1100 may be multiple components, including a transmitter and a receiver, providing a unit for communicating with various other devices over transmission media, including a wireless channel, a wired channel, an optical cable, and other transmission media. The processor 1110 is responsible for managing the bus architecture and general processing, while the memory 1120 may store the data used by the processor 1110 when performing operations.

The processor 1110 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

This disclosure further provides a processor readable storage medium, which stores a computer program for causing the processor to perform beam failure detection method on the side of the terminal, the first node, or the network device as described above.

The processor readable storage medium may be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, nonvolatile memory (NAND FLASH), solid state disk (SSD)), etc.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A beam failure detection method, applied to a terminal, comprising:
obtaining a first measurement value, wherein the first measurement value is obtained by the terminal based on a first beam failure detection (BFD) set;
obtaining a first indication value, wherein the first indication value is obtained by a first node based on a second BFD set; and
determining whether a beam failure occurs to a third BFD set based on the first measurement value and the first indication value.

2. The beam failure detection method according to claim 1, wherein the first BFD set is used for beam failure detection of an equivalent link, and the equivalent link corresponds to a channel formed from a network device to the first node and then to the terminal;
the second BFD set is used for beam failure detection of a first hop link, and the first hop link corresponds to a channel formed from the network device to the first node; and
the third BFD set is used for beam failure detection of a second hop link, and the second hop link corresponds to a channel formed from the first node to the terminal.

3. The beam failure detection method according to claim 1, wherein the obtaining the first indication value comprises:
receiving the first indication value transmitted by the first node,
wherein the first indication value is used to indicate one of the following target values:
a local measurement value, wherein the local measurement value is a measurement value obtained by the first node from the second BFD set;
a local measurement value and a measurement offset value, wherein the measurement offset value is a measurement deviation of the local measurement value;
an estimated value determined by the first node based on the local measurement value and the measurement offset value.

4. The beam failure detection method according to claim 3, wherein the first indication value indicates an absolute quantization value of the target value; or, the first indication value indicates a relative quantization value of the target value relative to a first predefined threshold.

5. The beam failure detection method according to claim 1, wherein the determining whether the beam failure occurs to the third BFD set based on the first measurement value and the first indication value comprises:
determining a third measurement value based on the first measurement value and the first indication value; and
determining whether the beam failure occurs to the third BFD set based on the third measurement value.

6. The beam failure detection method according to claim 5, wherein the determining the third measurement value based on the first measurement value and the first indication value comprises:
determining a second measurement value based on the first indication value, and determining a difference between the first measurement value and the second measurement value as the third measurement value; or,
determining a second measurement value based on the first indication value, and determining a sum of the first measurement value and the second measurement value as the third measurement value; or,
determining a second indication value corresponding to the first measurement value, and determining a logical XOR value of the first indication value and the second indication value as the third measurement value; or,
determining a second indication value corresponding to the first measurement value, and determining a logical OR value of the first indication value and the second indication value as the third measurement value; or,
determining a second indication value corresponding to the first measurement value, and determining a logical AND value of the first indication value and the second indication value as the third measurement value.

7. The beam failure detection method according to claim 1, wherein the determining whether the beam failure occurs to the third BFD set based on the first measurement value and the first indication value comprises:
determining whether the beam failure occurs to the first BFD set based on the first measurement value;
determining whether the beam failure occurs to the second BFD set based on the first indication value;
determining that the beam failure occurs to the third BFD set, in a case where the beam failure occurs to the first BFD set, and the beam failure does not occur to the second BFD set; and
determining that the beam failure does not occur to the third BFD set, in a case where the beam failure does not occur to the first BFD set, and the beam failure occurs to the second BFD set.

8. The beam failure detection method according to claim 2, wherein the first hop link comprises at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

9. The beam failure detection method according to claim 2, wherein the second hop link comprises at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

10. The beam failure detection method according to claim 1, wherein after determining whether the beam failure occurs to the third BFD set based on the first measurement value and the first indication value, the method further comprises:
transmitting a first beam failure recovery request to a network device, in response to determining that the beam failure occurs to the third BFD set, wherein the first beam failure recovery request carries at least one of:
first information, used to indicate that the beam failure occurs to the third BFD set; or
a first index, wherein the first index is an index of a first new beam identification (NBI) set corresponding to the third BFD set.

11. The beam failure detection method according to claim 1, further comprising:
determining whether the beam failure occurs to the first BFD set based on the first measurement value; and
transmitting a second beam failure recovery request to a network device, in response to determining that the beam failure occurs to the first BFD set, wherein the second beam failure recovery request carries at least one of:
second information, used to indicate that the beam failure occurs to the first BFD set; or
a second index, wherein the second index is an index of a second NBI set corresponding to the first BFD set.

12. A beam failure detection method, applied to a first node, comprising:
performing measurement on a second BFD set to obtain a local measurement value; and
transmitting a first indication value to a terminal, wherein the first indication value is used to indicate one of the following target values:
the local measurement value;
the local measurement value and a measurement offset value, wherein the measurement offset value is a measurement deviation of the local measurement value;
an estimated value determined based on the local measurement value and the measurement offset value.

13. The beam failure detection method according to claim 12, wherein the second BFD set is used for beam failure detection of a first hop link, and the first hop link corresponds to a channel formed from a network device to the first node.

14. The beam failure detection method according to claim 12, wherein the first indication value indicates an absolute quantization value of the target value; or, the first indication value indicates a relative quantization value of the target value relative to a first predefined threshold.

15. A beam failure detection method, applied to a network device, comprising:
receiving a first beam failure recovery request or a second beam failure recovery request transmitted by a terminal,
wherein the first beam failure recovery request carries at least one of:
first information, used to indicate that a beam failure occurs to a third BFD set; or
a first index, wherein the first index is an index of a first NBI set corresponding to the third BFD set,
wherein the second beam failure recovery request carries at least one of:
second information, used to indicate that a beam failure occurs to a first BFD set; or
a second index, wherein the second index is an index of a second NBI set corresponding to the first BFD set.

16. The beam failure detection method according to claim 15, wherein the first BFD set is used for beam failure detection of an equivalent link, and the equivalent link corresponds to a channel formed from the network device to a first node and then to the terminal; and
the third BFD set is used for beam failure detection of a second hop link, and the second hop link corresponds to a channel formed from the first node to the terminal.

17. The beam failure detection method according to claim 15, further comprising:
configuring a second BFD set for the terminal, wherein the second BFD set is used for beam failure detection of a first hop link, and the first hop link corresponds to a channel formed from the network device to a first node.

18. A terminal, comprising: a transceiver, a memory, a processor, and a computer program stored on the memory and executable on the processor, wherein the processor is configured to read the computer program from the memory and perform the following processes:
obtaining a first measurement value, wherein the first measurement value is obtained by the terminal based on a first BFD set;
obtaining a first indication value, wherein the first indication value is obtained by a first node based on a second BFD set; and
determining whether a beam failure occurs to a third BFD set based on the first measurement value and the first indication value.

19. The terminal according to claim 18, wherein the first BFD set is used for beam failure detection of an equivalent link, and the equivalent link corresponds to a channel formed from a network device to the first node and then to the terminal;
the second BFD set is used for beam failure detection of a first hop link, and the first hop link corresponds to a channel formed from the network device to the first node; and
the third BFD set is used for beam failure detection of a second hop link, and the second hop link corresponds to a channel formed from the first node to the terminal.

20. The terminal according to claim 18, wherein the processor is further configured to read the program from the memory and perform the following processes:
receiving the first indication value transmitted by the first node,
wherein the first indication value is used to indicate one of the following target values:
a local measurement value, wherein the local measurement value is a measurement value obtained by the first node from the second BFD set;
a local measurement value and a measurement offset value, wherein the measurement offset value is a measurement deviation of the local measurement value;
an estimated value determined by the first node based on the local measurement value and the measurement offset value.

21. The terminal according to claim 20, wherein the first indication value indicates an absolute quantization value of the target value; or, the first indication value indicates a relative quantization value of the target value relative to a first predefined threshold.

22. The terminal according to claim 18, wherein the processor is further configured to read the program from the memory and perform the following processes:
determining a third measurement value based on the first measurement value and the first indication value; and
determining whether the beam failure occurs to the third BFD set based on the third measurement value.

23. The terminal according to claim 22, wherein the processor is further configured to read the program from the memory and perform the following processes:
determining a second measurement value based on the first indication value, and determining a difference between the first measurement value and the second measurement value as the third measurement value; or,
determining a second measurement value based on the first indication value, and determining a sum of the first measurement value and the second measurement value as the third measurement value; or,
determining a second indication value corresponding to the first measurement value, and determining a logical XOR value of the first indication value and the second indication value as the third measurement value; or,
determining a second indication value corresponding to the first measurement value, and determining a logical OR value of the first indication value and the second indication value as the third measurement value; or,
determining a second indication value corresponding to the first measurement value, and determining a logical AND value of the first indication value and the second indication value as the third measurement value.

24. The terminal according to claim 18, wherein the processor is further configured to read the program from the memory and perform the following processes:
determining whether the beam failure occurs to the first BFD set based on the first measurement value;
determining whether the beam failure occurs to the second BFD set based on the first indication value;
determining that the beam failure occurs to the third BFD set, in a case where the beam failure occurs to the first BFD set, and the beam failure does not occur to the second BFD set; and
determining that the beam failure does not occur to the third BFD set, in a case where the beam failure does not occur to the first BFD set, and the beam failure occurs to the second BFD set.

25. The terminal according to claim 19, wherein the first hop link comprises at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

26. The terminal according to claim 19, wherein the second hop link comprises at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

27. The terminal according to claim 18, wherein the processor is further configured to read the program from the memory and perform the following processes:
transmitting a first beam failure recovery request to a network device, in response to determining that the beam failure occurs to the third BFD set, wherein the first beam failure recovery request carries at least one of:
first information, used to indicate that the beam failure occurs to the third BFD set; or
a first index, wherein the first index is an index of a first new beam identification (NBI) set corresponding to the third BFD set.

28. The terminal according to claim 18, wherein the processor is further configured to read the program from the memory and perform the following processes:
determining whether the beam failure occurs to the first BFD set based on the first measurement value; and
transmitting a second beam failure recovery request to a network device, in response to determining that the beam failure occurs to the first BFD set, wherein the second beam failure recovery request carries at least one of:
second information, used to indicate that the beam failure occurs to the first BFD set; or
a second index, wherein the second index is an index of a second NBI set corresponding to the first BFD set.

29. A first node, comprising: a transceiver, a memory, a processor, and a computer program stored on the memory and executable on the processor, wherein the processor is configured to read the computer program from the memory and perform the following processes:
performing measurement on a second BFD set to obtain a local measurement value; and
transmitting a first indication value to a terminal, wherein the first indication value is used to indicate one of the following target values:
the local measurement value;
the local measurement value and a measurement offset value, wherein the measurement offset value is a measurement deviation of the local measurement value;
an estimated value determined based on the local measurement value and the measurement offset value.

30. The first node according to claim 29, wherein the second BFD set is used for beam failure detection of a first hop link, and the first hop link corresponds to a channel formed from a network device to the first node.

31. The first node according to claim 29, wherein the first indication value indicates an absolute quantization value of the target value; or, the first indication value indicates a relative quantization value of the target value relative to a first predefined threshold.

32. A network device, comprising: a transceiver, a memory, a processor, and a computer program stored on the memory and executable on the processor, wherein the processor is configured to read the computer program from the memory and perform the following processes:
receiving a first beam failure recovery request or a second beam failure recovery request transmitted by a terminal,
wherein the first beam failure recovery request carries at least one of:
first information, used to indicate that a beam failure occurs to a third BFD set; or
a first index, wherein the first index is an index of a first NBI set corresponding to the third BFD set,
wherein the second beam failure recovery request carries at least one of:
second information, used to indicate that a beam failure occurs to a first BFD set; or
a second index, wherein the second index is an index of a second NBI set corresponding to the first BFD set.

33. The network apparatus according to claim 32, wherein the first BFD set is used for beam failure detection of an equivalent link, and the equivalent link corresponds to a channel formed from the network device to a first node and then to the terminal; and
the third BFD set is used for beam failure detection of a second hop link, and the second hop link corresponds to a channel formed from the first node to the terminal.

34. The network apparatus according to claim 32, wherein the processor is further configured to read the program from the memory and perform the following process:
configuring a second BFD set for the terminal, wherein the second BFD set is used for beam failure detection of a first hop link, and the first hop link corresponds to a channel formed from the network device to a first node.

35. A beam failure detection apparatus, applied to a terminal, comprising:
a first obtaining module, configured to obtain a first measurement value, wherein the first measurement value is obtained by the terminal based on a first beam failure detection (BFD) set;
a second obtaining module, configured to obtain a first indication value, wherein the first indication value is obtained by a first node based on a second BFD set; and
a first determination module, configured to determine whether a beam failure occurs to a third BFD set based on the first measurement value and the first indication value.

36. The apparatus according to claim 35, wherein the first BFD set is used for beam failure detection of an equivalent link, and the equivalent link corresponds to a channel formed from a network device to the first node and then to the terminal;
the second BFD set is used for beam failure detection of a first hop link, and the first hop link corresponds to a channel formed from the network device to the first node; and
the third BFD set is used for beam failure detection of a second hop link, and the second hop link corresponds to a channel formed from the first node to the terminal.

37. The apparatus according to claim 35, wherein the second obtaining module comprises:
a first obtaining submodule, configured to receive the first indication value transmitted by the first node,
wherein the first indication value is used to indicate one of the following target values:
a local measurement value, wherein the local measurement value is a measurement value obtained by the first node from the second BFD set;
a local measurement value and a measurement offset value, wherein the measurement offset value is a measurement deviation of the local measurement value;
an estimated value determined by the first node based on the local measurement value and the measurement offset value.

38. The apparatus according to claim 37, wherein the first indication value indicates an absolute quantization value of the target value; or, the first indication value indicates a relative quantization value of the target value relative to a first predefined threshold.

39. The apparatus according to claim 35, wherein the first determination module comprises:
a first determination submodule, configured to determine a third measurement value based on the first measurement value and the first indication value; and
a second determination submodule, configured to determine whether the beam failure occurs to the third BFD set based on the third measurement value.

40. The apparatus according to claim 39, wherein the first determining submodule comprises:
a first determination unit, configured to determine a second measurement value based on the first indication value, and determine a difference between the first measurement value and the second measurement value as the third measurement value; or,
a second determination unit, configured to determine a second measurement value based on the first indication value, and determine a sum of the first measurement value and the second measurement value as the third measurement value; or,
a third determination unit, configured to determine a second indication value corresponding to the first measurement value, and determine a logical XOR value of the first indication value and the second indication value as the third measurement value; or,
a fourth determination unit, configured to determine a second indication value corresponding to the first measurement value, and determine a logical OR value of the first indication value and the second indication value as the third measurement value; or,
a fifth determination unit, configured to determine a second indication value corresponding to the first measurement value, and determine a logical AND value of the first indication value and the second indication value as the third measurement value.

41. The apparatus according to claim 35, wherein the first determination module comprises:
a third determination submodule, configured to determine whether the beam failure occurs to the first BFD set based on the first measurement value;
a fourth definite submodule, configured to determine whether the beam failure occurs to the second BFD set based on the first indication value;
a fifth definite submodule, configured to determine that the beam failure occurs to the third BFD set, in a case where the beam failure occurs to the first BFD set, and the beam failure does not occur to the second BFD set; and
a sixth deterministic submodule, configured to determine that the beam failure does not occur to the third BFD set, in a case where the beam failure does not occur to the first BFD set, and the beam failure occurs to the second BFD set.

42. The apparatus according to claim 36, wherein the first hop link comprises at least one of the following:
beamforming of a transmission beam for the network device;
a channel between the network device and a reconfigurable intelligent surface (RIS);
beamforming of a reception beam for an RIS;
phase modulation for an RIS; or
beamforming of a transmission beam for an RIS.

43. The apparatus according to claim 36, wherein the second hop link comprises at least one of the following:
beamforming of a reception beam for the terminal;
a channel between an RIS and the terminal;
beamforming of a transmission beam for an RIS;
phase modulation for an RIS;
beamforming of a reception beam for an RIS; or
a channel between the network device and an RIS.

44. The apparatus according to claim 35, further comprising a first beam recovery module, configured to transmit a first beam failure recovery request to a network device, in response to determining that the beam failure occurs to the third BFD set, wherein the first beam failure recovery request carries at least one of:
first information, used to indicate that the beam failure occurs to the third BFD set; or
a first index, wherein the first index is an index of a first new beam identification (NBI) set corresponding to the third BFD set.

45. The apparatus according to claim 35, further comprising:
a third determination module, configured to determine whether the beam failure occurs to the first BFD set based on the first measurement value; and
a second beam recovery module, configured to transmit a second beam failure recovery request to a network device, in response to determining that the beam failure occurs to the first BFD set, wherein the second beam failure recovery request carries at least one of:
second information, used to indicate that the beam failure occurs to the first BFD set; or
a second index, wherein the second index is an index of a second NBI set corresponding to the first BFD set.

46. A beam failure detection apparatus, applied to a first node, comprising:
a third obtaining module, configured to perform measurement on a second BFD set to obtain a local measurement value; and
a transmitting module, configured to transmit a first indication value to a terminal, wherein the first indication value is used to indicate one of the following target values:
the local measurement value;
the local measurement value and a measurement offset value, wherein the measurement offset value is a measurement deviation of the local measurement value;
an estimated value determined based on the local measurement value and the measurement offset value.

47. The apparatus according to claim 46, wherein the second BFD set is used for beam failure detection of a first hop link, and the first hop link corresponds to a channel formed from a network device to the first node.

48. The apparatus according to claim 46, wherein the first indication value indicates an absolute quantization value of the target value; or, the first indication value indicates a relative quantization value of the target value relative to a first predefined threshold.

49. A beam failure detection apparatus, applied to network device, comprising:
a receiving module, configured to receive a first beam failure recovery request or a second beam failure recovery request transmitted by a terminal,
wherein the first beam failure recovery request carries at least one of:
first information, used to indicate that a beam failure occurs to a third BFD set; or
a first index, wherein the first index is an index of a first NBI set corresponding to the third BFD set,
wherein the second beam failure recovery request carries at least one of:
second information, used to indicate that a beam failure occurs to a first BFD set; or
a second index, wherein the second index is an index of a second NBI set corresponding to the first BFD set.

50. The apparatus according to claim 49, wherein the first BFD set is used for beam failure detection of an equivalent link, and the equivalent link corresponds to a channel formed from the network device to a first node and then to the terminal; and
the third BFD set is used for beam failure detection of a second hop link, and the second hop link corresponds to a channel formed from the first node to the terminal.

51. The apparatus according to claim 49, further comprising:
a configuration module, configured to configure a second BFD set for the terminal, wherein the second BFD set is used for beam failure detection of a first hop link, and the first hop link corresponds to a channel formed from the network device to a first node.

52. A processor readable storage medium, wherein the processor readable storage medium stores a computer program, and the computer program is configured to cause a processor to perform the beam failure detection method according to any one of claims 1 to 11, or to cause a processor to perform the beam failure detection method according to any one of claims 12 to 14, or to cause a processor to perform the beam failure detection method according to any one of claims 15 to 17.
